# EUROPÄISCHE PATENTSCHRIFT

(11) **EP 2 776 229 B1**
(45) Veröffentlichungstag und Bekanntmachung des Hinweises auf die Patenterteilung: **15.01.2020**
(21) Anmeldenummer: 12778738.0
(22) Anmeldetag: 30.10.2012
(51) Int. Cl.: B29C 70/74, B29C 39/10, B29L 1/00, B29C 70/84, C09J 5/00, C09J 175/02, B29K 75/00, B29C 37/00

(54) **VERFAHREN ZUR IN-SITU-HERSTELLUNG EINES BEFESTIGUNGSELEMENTS, VERWENDUNG EINES KLEBSTOFFS ZUR IN-SITU-HERSTELLUNG EINES BEFESTIGUNGSELEMENTS, UND SUBSTRAT MIT EINEM BEFESTIGUNGSELEMENT ERHÄLTLICH DURCH DAS VERFAHREN**
METHOD FOR IN-SITU MANUFACTURING OF A FIXING ELEMENT, USE OF A GLUE FOR MANUFACTURING OF A FIXING ELEMENT, AND SUBSTRATE WITH A FIXING ELEMENT OBTAINABLE BY THE METHOD
PROCÉDÉ DE FABRICATION IN SITU D'UN ÉLÉMENT DE FIXATION, UTILISATION D'UNE COLLE POUR LA FABRICATION IN SITU D'UN ÉLÉMENT DE FIXATION, SUBSTRAT AVEC UN ÉLÉMENT DE FIXATION RÉALISABLE PAR LE PROCÉDÉ

(30) Priorität: 07.11.2011 EP 11188047
(43) Veröffentlichungstag der Anmeldung: 17.09.2014
(73) Patentinhaber: nolax AG, 6203 Sempach Station (CH)
(72) Erfinder: STEINER, Patrick, CH-6467 Schattdorf (CH); MEYER, Sebastian, 68259 Mannheim (DE); BRANDMAIR, Anton, CH-6207 Nottwil (CH); SCHWOTZER, Willi, CH-6206 Neuenkirch (CH)
(74) Vertreter: Hepp Wenger Ryffel AG
(86) Internationale Anmeldenummer: PCT/EP2012/071420
(87) Internationale Veröffentlichungsnummer: WO 2013/068265

(56) Entgegenhaltungen:
- EP-A1- 1 291 146
- EP-A1- 2 133 227
- EP-A2- 0 421 089
- EP-B1- 1 958 975
- WO-A1-2008/027137
- DE-A1- 4 301 026
- DE-C1- 19 724 592
- US-A- 2 255 184
- US-A- 4 281 602

## Beschreibung

### Hintergrund der Erfindung

Die Erfindung betrifft ein Verfahren zur In-Situ-Herstellung von Befestigungselementen mit Hilfe von flüssigem Klebstoff auf Substraten und die Verwendung eines flüssig zu applizierenden Klebstoffes zur In-Situ-Herstellung von Befestigungselementen auf Substraten gemäss den Merkmalen der unabhängigen Ansprüche. Diese Befestigungselemente dienen der mechanischen Montage von Elementen, beispielsweise Abdeckungen oder Verkleidungen.

Im Stand der Technik ist die formschlüssige, durch die Geometrie der Verbindungspartner bedingte, oder stoffschlüssige, durch molekulare Kräfte zusammengehaltene, Verbindung von Befestigungselementen wie z.B. Laschen, Winkel, Haltebolzen, Montageclips mittels Schrauben, Nieten oder Stiften bzw. durch Klebstoff bekannt.

Für stoffschlüssige Montagen mittels Klebstoff wird eine Vielzahl von Klebstoffsystemen verwendet. So werden für mechanisch nicht oder wenig beanspruchte Befestigungselemente Haftklebstoffe oder Haftklebebänder verwendet, die zwar schnelle Verbindungen erlauben, aber aufgrund ihrer Kriecheigenschaften für lasttragende Verbindungen ungeeignet sind.

Besser geeignet für die Montage mechanisch dauerbelasteter Befestigungselemente, welche Lasten auf Montageflächen übertragen, sind Duromer-Systeme, d.h. Klebstoffe, die bei ihrer Applikation vernetzen und später nicht durch kalten Fluss versagen. Typische zweikomponentige Systeme basieren auf Polyurethanen, Epoxiden oder Acrylaten. Der Nachteil dieser Systeme liegt in der relativ langen Aushärtezeit, während der das Befestigungselement in Position gehalten werden muss.

Ebenfalls geeignet sind Einkomponentenklebstoffsysteme auf Basis feuchtehärtender Schmelzklebstoffe. Diese weisen durch die aufgrund ihrer Hotmelteigenschaften gegebene Anfangshaftung nicht die nachteiligen Eigenschaften der zweikomponentigen Systeme auf, benötigen aber zur Durchführung und damit zur Erreichung der geforderten Eigenschaften eine Reaktion mit Wasser, was bei geschlossenen Oberflächen ein Problem darstellen kann. Dies gilt auch für Cyan-Acrylatsysteme, die durch Wasser gestartet werden müssen und zudem meist eine geringe Widerstandskraft gegenüber Wasser aufweisen.

EP 1 947 156 B1 beschreibt das Verbinden nichttransparenter Teile durch einen Klebstoff, der durch Bestrahlen aushärtet. Auch sind thermisch latent reaktive Systeme bekannt, deren Aushärtung nach Positionierung des Befestigungselements mit Hilfe eines Wärmestosses ausgelöst wird. Auch hier wird jeweils ein zweiter Prozesschritt benötigt. Im Fall des durch Bestrahlung aushärtbaren Klebstoffes muss ein transparentes Element zwischen die zu verbindenden Teile einfügbar sein.

DE 10 2007 010 540 A1 offenbart eine Lösung dieses Problems mittels sogenannter Klebnieten. Dabei werden die zu verklebenden Flächen mit einem konventionellen Zweikomponentensystem beleimt. Zur Fixierung der Teile während des Aushärtungsprozesses werden dübelähnliche Verbindungen dadurch geschaffen, dass Schlitze, welche beide Klebeflächen durchdringen, mit schnell aushärtenden Klebstoff-Systemen ausgegossen werden. Auch bei diesem Verfahren sind zwei Prozessschritte erforderlich.

Allen Duromer-Systemen gereicht zum Nachteil, dass sie entweder langsam aushärten oder zur Aushärtung einen zweiten Prozessschritt benötigen.

US 4,735,753 betrifft die In-Situ-Herstellung eines Befestigungselements in Form eines Druckknopfzapfens und der dazugehörigen Hülse aus Kunststoff, welche dadurch hergestellt werden, dass ein Kunststoffstück mit Hilfe einer Ultraschallvorrichtung verflüssigt, auf ein poröses Substrat wie z.B. Stoff aufgebracht und mit Hilfe eines Presswerkzeugs von oben und unten zu den entsprechenden Duckknopfteilen geformt wird. Der Kunststoff dringt dabei in die Poren auf der Oberfläche des Substrats ein und tritt an der Unterseite wieder aus. Dieses Verfahren ist auf glatten Oberflächen nicht anwendbar.

EP 1 291 146 zeigt ein Verfahren zum Verbinden von textilen Werkstoffen mit spritzgegossenen Kunststoffelementen, bei dem der textile Werkstoff in eine Fertigungsanlage, in der auch das Aufspritzen des Kunststoffelements erfolgt, eingeführt und vorbehandelt wird. EP 0 421 089 zeigt ein Verfahren zum örtlich definierten, festhaftenden Anbringen von Kunststoff Kleinteilen an Formpressteilen. Es erfolgt ein unmittelbares formschüssiges Anspritzen eines Kunststoff-Kleinteils an die Wandung des Frompressteils, bei dem ausserdem ein kleiner Durchburch in die Wandung des Formpressteils eingeformt wird. US 2 255 184 zeigt ein Verfahren zum Sichern eines Metallteils auf einem Isolationselement aus Keramik, Kunstharz und dergleichen mittels eines Bindemittels. DE 197 24 592 zeigt Verdeck für ein Kraftfahrzeug, wobei ein Verdeckflächenelement mit einem anderen Konstruktionselement verbunden ist mittels eines streifenförmigen PUR-Giessharz-Wulstelementes. Keines dieser Dokumente zeigt die in-situ Herstellung eines lasttragenden Elements aus Kunststoff mittels eines Zweikomponenten-Klebstoffs, der rasch zu einem Duromer aushärtet. WO2008/027137 zeigt ein Verfahren zur Herstellung eines gegossenen Kunststoffgegenstands mit einer gegossenen Ausbuchtung auf der einen Seite und einer gegenüberliegenden Seite, die frei von Einfallstellen ist. Die WO2008/027137 offenbart die In-Situ-Herstellung eines lasttragenden Befestigungselements mit folgenden Schritten:
a) das Bereitstellen eines Substrates,
b) Anordnen einer mehrteiligen Gussform auf dem Substrat,
c) Befüllen der Gussform durch eine Öffnung mit einem flüssigen Klebstoff, und
d) Aushärten des Klebstoffes auf dem Substrat,
wobei in c) die Gussform mit einem aushärtenden Zwei-Komponenten-Klebstoff auf Basis von Polyharnstoff, welcher zu einem Duromeren aushärtet, befüllt wird, wobei der Zwei-Komponenten-Klebstoff eine isocyanathaltige Komponente A und eine aminhaltige Komponente B umfasst, wobei die Komponente A ein Isocyanat-terminiertes Präpolymer mit einer Isocyanat-Funktionalität von 2 und die Komponente B wenigstens ein Polyamin enthält.

Es ist somit die Aufgabe der Erfindung, die Nachteile des Standes der Technik zu überwinden, d.h. lasttragende Befestigungselemente mit Hilfe eines Verfahrens anzubringen, das schnell ist, lediglich einen Arbeitsschritt benötigt und auch auf nicht-porösen und nichttransparenten Substraten anwendbar ist.

### Beschreibung der Erfindung

Diese Aufgabe wird durch die Gegenstände der unabhängigen Ansprüche gelöst.

Das erfindungsgemässe Verfahren eignet sich zur In-Situ-Herstellung von Befestigungselementen auf einem oder mehreren Substraten mit Hilfe von flüssigem Klebstoff und ist dadurch gekennzeichnet, dass eines oder mehrere Substrate bereitgestellt werden, eine ein- oder mehrteilige Gussform auf dem Substrat oder den Substraten angeordnet wird, die Gussform durch eine Öffnung mit einem flüssigen Klebstoff befüllt wird und der Klebstoff aushärtet.

Befestigungselemente können Laschen, Winkel, Bolzen, Clips, Hülsen, Innengewinde, Schrauben, Stifte, Aussparungen, Vorsprünge, Schienen, Widerhaken oder Nieten sein.

Substrate können unterschiedliche Rauheiten der Oberfläche oder eine poröse Oberfläche aufweisen. Ein einzelnes Substrat kann auch verschieden raue oder poröse Bereiche seiner Oberfläche aufweisen. Die erfindungsgemässen Befestigungselemente aus Klebstoff haften auf Substratoberflächen geringer Rauheit ebenso wie auf porösen Oberflächen oder Oberflächen, welche sehr rau sind. Zudem können Substrate verwendet werden, die nicht-transparent sind.

Der Klebstoff ist ein schnell aushärtender Zweikomponentenklebstoff auf Basis von Polyharnstoff wie in EP 1 958 975 B1 beschrieben, nämlich der eine isocyanathaltige Komponente A und eine aminhaltige Komponente B umfasst, wobei die Komponente A ein Isocyanat-terminiertes Präpolymer mit einer Isocyanat-Funktionalität von ≥ 1,7 und die Komponente B wenigstens ein Di- und/oder Polyamin enthält, und wobei das stöchiometrische Verhältnis von Isocyanatgruppen in Komponente A zu Amingruppen in Komponente B 0,5 bis 1,2 beträgt. Der Klebstoff wird als flüssig bezeichnet im bestimmungsgemässen Auftragszustand bei einer Viskosität von <10000 mPas, vorzugsweise <300 mPas, idealerweise <100 mPas (gemessen im Mischkopf des Applikators bei 35°C-65°C, vorzugsweise 50°C und einen Druck von 70-140 bar, vorzugsweise 100 bar). Diese Mischviskosität kann durch Anwählen der Temperatur der Komponenten weiter optimiert werden.

Das Aushärten bezeichnet in diesem Zusammenhang die chemische Verfestigung des Klebstoffes durch Polymerisation, -kondensation und -addition.

Das Verfahren wird in einem kombinierten Arbeitsschritt ausgeführt, indem eine ein- oder mehrteilige Gussform auf das Substrat gesetzt wird, durch eine Öffnung mit flüssigem Klebstoff so befüllt wird, dass dieser in die Adhäsionszone auf dem Substrat gelangt und dort in der Gussform zu einem Befestigungselement aushärtet. Somit entfallen die üblichen Fixationselemente. Bevorzugt wir die Applikationsvorrichtung mit einem Mischkopf ausgestattet, der zur Verarbeitung schnell aushärtender Klebstoffsysteme geeignet ist und die Dosierung kleiner Klebstoffportionen erlaubt wie z.B. eine Hochdruck-Gegenstrominjektionsanlage. Derartige Anlagen sind z. B. von Isotherm AG, Uetendorf, Schweiz, erhältlich. Nachdem die Gussform, die die Form des späteren Befestigungselements definiert, positioniert ist, wird aus dem Mischkopf ein Klebstoffschuss durch eine Öffnung der Gussform gepumpt. Der flüssige Klebstoff dringt so in den Hohlraum der Gussform, und benetzt sowohl die Gussform als auch das Substrat. Die Grösse des Hohlraums kann z. B. durch Abstandhalter auf dem Substrat kontrolliert werden. Nach wenigen Sekunden ist die Aushärtung zum Befestigungselement erfolgt.

Die Gussform kann vom gegossenen Befestigungselement gelöst werden. Dies wird erreicht durch die Verwendung einer lösbaren Geometrie zwischen Gussform und dem Befestigungselement und einer nichthaftenden Stoffpaarung zwischen Klebstoff und dem Stoff der Gussform. Typischerweise werden Materialien mit niedriger Oberflächenspannung eingesetzt, beispielsweise fluorierte Kohlenwasserstoffe oder zusätzliche Trennmittel.

Zwischen Gussform und gegossenem Befestigungselement kommt durch die formschlüssige Wechselwirkung eine Kraftübertragung zustande. Die Gussform kann gelöst und zum Giessen eines weiteren Befestigungselements verwendet werden oder aber als flexibles Gegenstück einer druckknopf-ähnlichen Verbindung dienen und auf dem Befestigungselement verbleiben. Gussformen werden entweder in einem Stück als flexible Formen gelöst oder entformt, indem ihre einzelnen Teile, sofern sie mehrteilig sind, separat entfernt werden.

In einer weiteren Ausführungsform wird das oben beschriebene Verfahren angewandt, indem eine ein- oder mehrteilige Gussform, die verschiedene Längen aufweisen oder längenverstellbar sein kann, verwendet wird, die auf Substrate mit unterschiedlicher Rauheiten der Oberfläche, Substrate mit porösen Oberflächen oder ein einzelnes Substrat mit verschieden rauen oder porösen Bereichen seiner Oberfläche gesetzt und durch eine Öffnung mit flüssigem Klebstoff auf der Basis von Polyharnstoff befüllt wird, so dass ein auf den Substraten angegossenes Befestigungselement in Form einer Schiene oder eines anderen Profils variabler Länge erhalten wird. Ein Angiessen von Schienen oder anderen Profilen variabler Länge ist auch auf nicht planen Substraten möglich.

Nach Aushärten des Klebstoffes kann die formschlüssig haftende Gussform als flexible Form in einem Stück nach Art eines Druccknopfs von der aus dem Klebstoff an die Substrate angegossenen Schiene bzw. dem Profil variabler Länge abgelöst oder entformt werden, indem ihre einzelnen Teile, sofern sie mehrteilig ist, separat entfernt werden.

Anschliessend können vorgefertigte Befestigungselemente formschlüssig, in variabler Anzahl und in variablem Abstand zueinander mit der Schiene oder dem Profil verbunden und von diesem auch wieder abgelöst werden. Als Beispiel dienen Befestigungselemente von Kabelbäumen.

Des Weiteren kann das oben beschriebene Verfahren mit einer ein-oder mehrteiligen Gussform angewendet werden, die auf poröse Substrate oder Substrate mit unterschiedlicher Oberflächenrauheit oder ein einzelnes Substrat mit verschiedenen rauen oder porösen Bereiche seiner Oberfläche gesetzt und durch eine Öffnung mit flüssigem Klebstoff auf der Basis von Polyharnstoff befüllt wird. Die Gussform ist derart mit Gewindenuten ausgestaltet, dass nach dem Aushärten des Klebstoffes und nach dem Entfernen der Gussform oder der Gussformteile ein Befestigungselement mit Aussengewinde, d.h. z.B. in Form einer Schraube, die sich auf der Substratoberfläche befindet, erhalten wird.

Ebenso kann das oben beschriebene Verfahren mit einer ein- oder mehrteiligen Gussform durchgeführt werden, die so auf poröse Substrate, Substrate unterschiedlicher Oberflächenrauheit oder ein einzelnes Substrat mit verschiedenen rauen oder porösen Bereiche seiner Oberfläche gesetzt wird, welches eine Aussparung, vorzugsweise eine Vertiefung, umfasst, dass ein Hohlraum gebildet wird, der sich vom Inneren der Gussform oberhalb der Substratoberfläche bis in das Substrat unterhalb der Oberfläche hinein erstreckt. Die Gussform wird durch eine Öffnung mit flüssigem Klebstoff auf der Basis von Polyharnstoff befüllt. Nach Aushärten des Klebstoffes werden die Gussform oder die Teile der Gussform so entfernt, dass ein Befestigungselement auf dem Substrat zurückbleibt, welches im Substrat unterhalb seiner Oberfläche formschlüssig oder stoff- und formschlüssig verankert ist. Beispielsweise kann die Verankerung eines solchen Befestigungselements die Form eines Schwalbenschwanzes haben, dessen untere Hälfte sich im Substrat und dessen obere Hälfte sich auf der Substratoberfläche befindet. Der Teil des Befestigungselements, die der Befestigung eines Gegenstücks oberhalb der Substratoberfläche dient, erstreckt sich oberhalb der Substratoberfläche und der Verankerung.

In einer weiteren Ausführungsform der Erfindung wird ein Verfahren zur In-Situ-Herstellung eines Befestigungselements auf porösen Substraten, Substraten mit unterschiedlicher Oberflächenrauheit oder einem einzelnen Substrat mit verschiedenen rauen oder porösen Bereichen seiner Oberfläche bereitgestellt, dadurch gekennzeichnet, dass eine ein- oder mehrteilige Gussform auf die Substrate gesetzt wird, welche neben einer Öffnung zum Einfüllen von flüssigem Klebstoff mindestens eine weitere Öffnung aufweist, durch die ein Formteil vor oder während des Befüllens der Gussform mit flüssigem Klebstoff bzw. vor dem Aushärten des flüssigen Klebstoffes in den Hohlraum eingebracht werden kann, ein Formteil in mindestens eine der Öffnungen eingebracht wird, die Gussform durch eine Öffnung mit einem flüssigen Klebstoff befüllt wird und der Klebstoff zu einem Befestigungselement aushärtet. Nach dem Aushärten des Klebstoffes wird sowohl die Gussform durch Entformen ihrer einzelnen Teile oder als flexible Form in einem Stück als auch das Formteil gelöst, z.B. durch Entnehmen oder Herausdrehen. Das erhaltene Befestigungselement befindet sich auf der Substratoberfläche und umfasst eine Vertiefung, wie z.B. ein Innengewinde, mit Hilfe derer ein Gegenstück wie z. B. eine Schraube daran festgeschraubt oder festgesteckt werden kann.

Ein Verfahren zur In-Situ-Herstellung eines Befestigungselements, wobei durch mindestens eine weitere Öffnung ein Formteil in den Hohlraum der ein- oder mehrteiligen Gussform eingebracht wird, ist auch möglich wenn das Substrat, auf das die Gussform gesetzt wird, eine Aussparung umfasst, wie oben beschrieben. Nach Aufsetzen einer insbesondere mehrteiligen Gussform auf ein Substrat oberhalb der Aussparung und nach oder kurz vor dem Einbringen eines Formteils in mindestens eine Öffnung der Gussform, wird durch eine andere Öffnung der Gussform flüssiger Klebstoff eingefüllt. Nach dem Aushärten des Klebstoffes wird das Formteil gelöst, beispielsweise durch Herausnehmen oder -drehen, und die Gussform entformt durch Entfernen ihrer einzelnen Teile oder als flexible Form in einem Stück. Zurück bleibt ein Befestigungselement, welches unterhalb der Oberfläche im Substrat insbesondere durch Formschluss verankert ist und oberhalb der Substratoberfläche eine Vertiefung z.B. in Form eines Innengewindes besitzt, mit Hilfe dessen ein Gegenstück befestigt werden kann, indem es eingesteckt oder eingeschraubt wird.

Das Formteil, das durch mindestens eine weitere Öffnung in den Hohlraum der Gussform eingebracht wird kann beispielsweise eine Schraube, ein Bolzen, ein Stempel, eine Niete oder ein Stift sein.

Ein weiteres erfindungsgemässes Verfahren betrifft das Anbringen von vorgefertigten Befestigungselementen auf Substraten mittels eines Klebstoffes, umfassend das Bereitstellen eines oder mehrerer Substrate, das Anordnen eines Befestigungselements auf oder oberhalb der Substratoberfläche, das Einbringen von Klebstoff durch eine Öffnung im Befestigungselement, insbesondere das Absenken eines Befestigungselements auf das Substrat und das Aushärten des Klebstoffes.

Vorgefertigte Befestigungselemente können Laschen, Winkel, Bolzen, Clips, Hülsen, Innengewinde, Schrauben, Stifte, Aussparungen, Vorsprünge, Schienen, Widerhaken oder Nieten sein und aus beispielsweise Kunststoffen oder Metall bestehen.

Substrate können unterschiedliche Rauheiten der Oberfläche oder eine poröse Oberfläche aufweisen. Ein einzelnes Substrat kann auch verschieden raue oder poröse Bereiche seiner Oberfläche aufweisen. Die erfindungsgemässen Befestigungselemente aus Klebstoff haften auf Substratoberflächen geringer Rauheit ebenso wie auf porösen Oberflächen oder Oberflächen, welche sehr rau sind. Zudem können Substrate verwendet werden, die nicht-transparent sind.

Der Klebstoff ist ein schnell aushärtender Zweikomponentenklebstoff auf Basis von Polyharnstoff wie in EP 1 958 975 B1 beschrieben, nämlich der eine isocyanathaltige Komponente A und eine aminhaltige Komponente B umfasst, wobei die Komponente A ein Isocyanat-terminiertes Präpolymer mit einer Isocyanat-Funktionalität von ≥ 1,7 und die Komponente B wenigstens ein Di- und/oder Polyamin enthält, und wobei das stöchiometrische Verhältnis von Isocyanatgruppen in Komponente A zu Amingruppen in Komponente B 0,5 bis 1,2 beträgt. Der Klebstoff wird als flüssig bezeichnet im bestimmungsgemässen Auftragszustand bei einer Viskosität von <10000 mPas, vorzugsweise <300 mPas, idealerweise <100 mPas (gemessen im Mischkopf des Applikators bei 35°C-65°C, vorzugsweise 50°C und einen Druck von 70-140 bar, vorzugsweise 100 bar). Diese Mischviskosität kann durch Anwählen der Temperatur der Komponenten weiter optimiert werden.

Das Aushärten bezeichnet in diesem Zusammenhang die chemische Verfestigung des Klebstoffes durch Polymerisation, -kondensation und -addition.

Das Verfahren zum Befestigen eines vorgefertigten Befestigungselements auf einem Substrat mit Hilfe von Kunststoff wird vorzugsweise automatisiert und in einem Arbeitsschritt durchgeführt. Dazu wird beispielsweise eine Vorrichtung zum Anbringen eines Befestigungselements verwendet, umfassend ein Magazin, das vorgefertigte Befestigungselemente enthält, und eine Auftragsvorrichtung für flüssigen Klebstoff, die so ausgebildet ist, dass der Klebstoff durch eine oder mehrere Öffnungen des Befestigungselements auf ein oder mehrere Substrate appliziert werden kann. Ein vorgefertigtes Befestigungselement wird aus dem mitlaufenden Magazin der Vorrichtung zum Anbringen eines Befestigungselements an den Montagepunkt auf oder oberhalb der Substratoberfläche gebracht und in dieser Position gehalten. Flüssiger, zweikomponentiger Klebstoff wird in einem Mischkopf hergestellt und mit Hilfe der Auftragsvorrichtung der Vorrichtung zum Anbringen eines Befestigungselements durch eine oder mehrere Öffnungen im vorgefertigten Befestigungselement auf die Substratoberfläche appliziert. Diese Klebstoffapplikation kann dabei so erfolgen, dass eine solche Menge Klebstoff verwendet wird, dass ein Zwischenraumraum zwischen auf dem Substrat aufgesetzten Befestigungselement und Substratoberfläche gefüllt wird. Alternativ kann auch eine Klebstoffmenge durch eine oder mehrere Öffnungen des oberhalb des Substrats gehaltenen Befestigungselementes auf die Substratoberfläche aufgebracht werden und das Befestigungselement auf die Klebstoffmenge abgesenkt werden oder eine Klebstoffmenge wird durch die Öffnung oder Öffnungen eines vorgefertigten, oberhalb der Substratoberfläche gehaltenen Befestigungselements aufgebracht, wobei durch das Klebstoffvolumen bedingt das Befestigungselement angehoben wird. Bis zum Aushärten des Klebstoffes wird das Befestigungselement mittels der Vorrichtung zum Anbringen eines Befestigungselements in Position gehalten bevor die Vorrichtung an den nächsten Montagepunkt auf der Substratoberfläche fährt.

Ein weiterer Aspekt der Erfindung betrifft die Verwendung eines flüssig zu applizierenden Klebstoffes zur In-Situ-Herstellung eines Befestigungselements oder zum Anbringen eines vorgefertigten Befestigungselements auf Substraten.

Der Klebstoff ist ein schnell aushärtender Zweikomponentenklebstoff auf Basis von Polyharnstoff wie in EP 1 958 975 B1 beschrieben, nämlich der eine isocyanathaltige Komponente A und eine aminhaltige Komponente B umfasst, wobei die Komponente A ein Isocyanat-terminiertes Präpolymer mit einer Isocyanat-Funktionalität von ≥ 1,7 und die Komponente B wenigstens ein Di- und/oder Polyamin enthält, und wobei das stöchiometrische Verhältnis von Isocyanatgruppen in Komponente A zu Amingruppen in Komponente B 0,5 bis 1,2 beträgt. Der Klebstoff wird als flüssig bezeichnet im bestimmungsgemässen Auftragszustand bei einer Viskosität von <10000 mPas, vorzugweise <300 mPas, idealerweise <100 mPas (gemessen im Mischkopf des Applikators bei 35°C-65°C, vorzugsweise 50°C und einen Druck von 70-140 bar, vorzugsweise 100 bar). Diese Mischviskosität kann durch Anwählen der Temperatur der Komponenten weiter optimiert werden.

Das unter Verwendung eines flüssig zu applizierenden Klebstoffes in situ hergestellte oder vorgefertigte Befestigungselement kann ein Clip, ein Bolzen, eine Hülse, ein Innengewinde, eine Schraube, ein Stift, eine Aussparung, ein Vorsprung, eine Schiene, ein Widerhaken, eine Niete, eine Lasche oder ein Winkel sein.

Die Substrate, auf welchen der flüssig zu applizierende Klebstoff zur In-Situ-Herstellung eines Befestigungselements oder zum Anbringen eines vorgefertigten Befestigungselements verwendet wird, weisen unterschiedliche Oberflächenrauheiten, poröse Oberflächen oder auf einzelnen Substraten auch verschiedene raue oder poröse Bereiche der Oberfläche auf.

Die oben beschriebene Verwendung des flüssig zu applizierenden Klebstoffes erfolgt, indem der Klebstoff durch eine Öffnung einer ein- oder mehrteiligen Gussform, die zuvor auf eine Substratoberfläche gesetzt wurde, in den Hohlraum der Gussform gefüllt und dort zu einem Befestigungselement aushärten gelassen wird.

Die Gussform ist vom ausgehärteten Befestigungselement entweder durch das Entformen mehrerer Teile oder als felxible Form in einem Stück lösbar. Sie kann neben der Öffnung zum Einfüllen des flüssigen Klebstoffes noch mindestens eine weitere Öffnung umfassen, durch welche vor oder während des Befüllens mit flüssigem Klebstoff bzw. bevor das Aushärten des flüssigen Klebstoffes stattgefunden hat, ein Formteil in den Hohlraum der Gussform eingebracht werden kann, welches vom ausgehärteten Befestigungselement lösbar ist.

Alternativ kann die Verwendung des flüssig zu applizierenden Klebstoffes auch erfolgen, indem der flüssige Klebstoff durch eine oder mehrere Öffnungen in einem vorgefertigten Befestigungselement, dass oberhalb oder auf der Substratoberfläche gehalten wird, auf das Substrat aufgebracht wird, wobei entweder ein Zwischenraum zwischen Substrat und Befestigungselement mit Klebstoff gefüllt wird, oder das Befestigungselement auf eine Klebstoffmenge auf dem Substrat abgesenkt wird, oder das Befestigungselement aufgrund des Klebstoffvolumens angehoben wird.

Die erfindungsgemässe Verwendung des flüssig zu applizierenden Klebstoffes zur In-Situ-Herstellung eines Befestigungselements oder zum Anbringen eines vorgefertigten Befestigungselements auf Substraten mit porösen Oberflächen, Oberflächen unterschiedlicher Rauheit oder verschiedenen rauen oder porösen Bereichen auf der Oberfläche einzelner Substrate kann mit Hilfe einer Vorrichtung zum Anbringen eines Befestigungselements erfolgen, welche mit einer Auftragsvorrichtung für flüssigen Klebstoff ausgestattet ist und einem Magazin, dass Gussformen bzw. vorgefertigte Befestigungselemente an den Montagepunkt auf dem Substrat transportiert, diese positioniert, mit flüssigem Klebstoff durch eine oder mehrere Öffnungen in der Gussform oder im vorgefertigten Befestigungselement befüllt und so lange hält bis der Klebstoff in der Gussform oder unterhalb des vorgefertigten Befestigungselements ausgehärtet ist.

Ein weiterer Aspekt der Erfindung sind Substrate mit Befestigungselementen, welche nach einem der vorangehend beschriebenen Verfahren erhältlich sind.

Die Substrate können unterschiedliche Rauheiten der Oberfläche, poröse Oberflächen oder auch verschiedene raue oder poröse Bereiche der Oberfläche eines einzelnen Substrats aufweisen.

Das Befestigungselement kann ein Clip, ein Bolzen, eine Hülse, ein Innengewinde, eine Schraube, ein Stift, eine Aussparung, ein Vorsprung, eine Schiene, ein Widerhaken, eine Niete, eine Lasche oder ein Winkel sein.

Ein weitere Aspekt der Erfindung ist eine Vorrichtung zum Anbringen eines Befestigungselements, welche mit einer Auftragsvorrichtung für flüssigen Klebstoff ausgestattet ist und einem Magazin, dass Gussformen bzw. vorgefertigte Befestigungselemente an den Montagepunkt auf dem Substrat transportiert, diese positioniert, mit flüssigem Klebstoff durch eine oder mehrere Öffnungen in der Gussform oder im vorgefertigten Befestigungselement befüllt und so lange hält bis der Klebstoff in der Gussform oder unterhalb des vorgefertigten Befestigungselements ausgehärtet ist.

### Beschreibung der Figuren

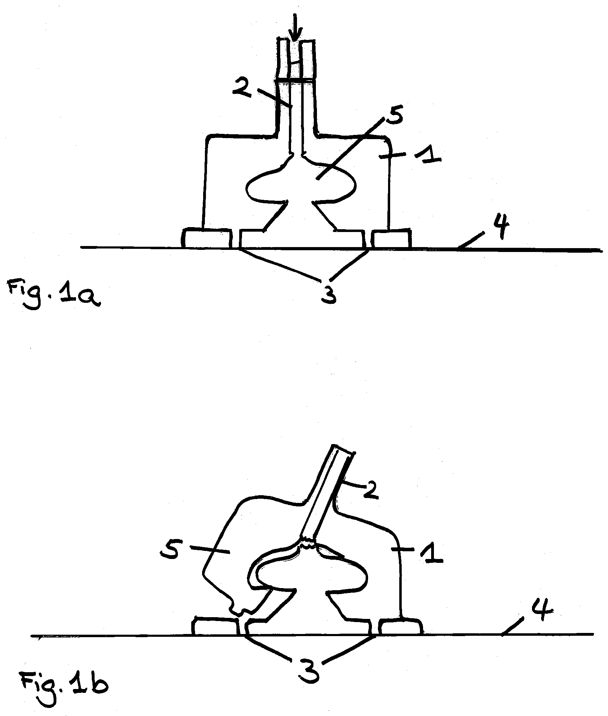

Die Erfindung wird durch die nachfolgenden Ausführungsbeispiele in den Fig. 1a bis 5 näher erläutert, ohne dass die Erfindung auf diese Ausführungsformen zu beschränken wäre.
Fig. 1a und b stellen den seitlichen Querschnitt einer vom Substrat wieder lösbaren, beispielsweise rotationssymmetrischen oder rechteckigen Gussform 1 mit Öffnung zum Einfüllen eines Klebstoffes 2 und Abstandhaltern 3 dar, die auf ein Substrat 4 gesetzt und mit flüssigem Klebstoff durch die Öffnung 2 befüllt wird. Nach Aushärten des Klebstoffes ist die formschlüssig haftende, flexible Gussform 1 als Ganzes nach Art eines Druckknopfes von dem aus Klebstoff an das Substrat angegossenen Befestigungselement 5 ablösbar.

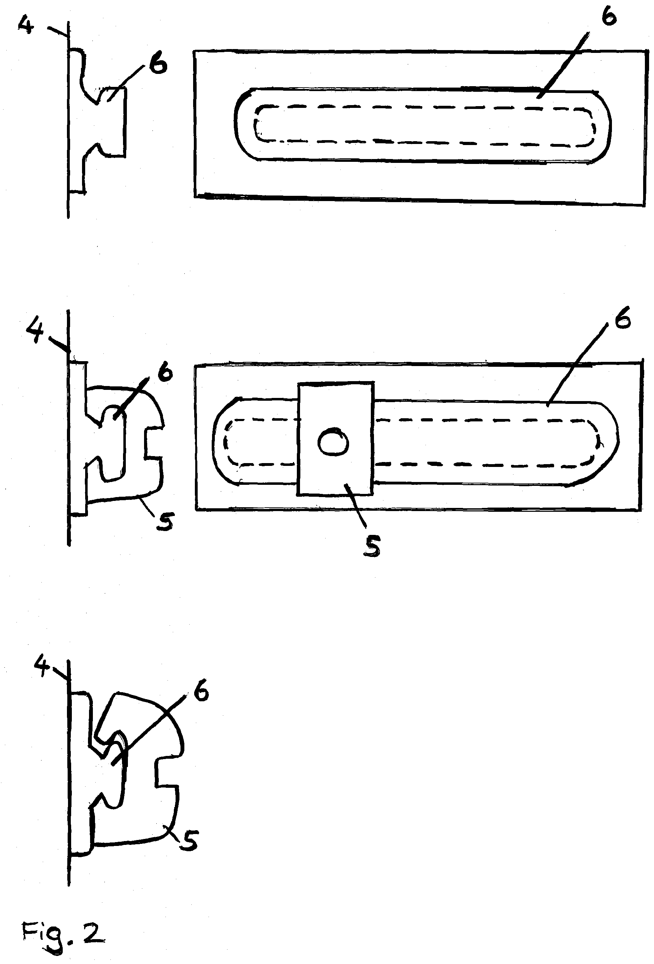

Fig. 2 zeigt den seitlichen Querschnitt und die Draufsicht einer Abwandlung des Befestigungselements nach Fig. 1a und b. Eine rechteckige Gussform, welche unterschiedliche Längen haben oder längenverstellbar sein kann, wird auf ein Substrat 4 gesetzt und durch eine Öffnung 2 mit flüssigem Klebstoff befüllt. Nach Aushärten des Klebstoffes kann die formschlüssig haftende Gussform in einem Stück nach Art eines Druckknopfs, wie in Fig. 1b im Querschnitt gezeigt, oder in einzelnen Teilen von der aus dem Klebstoff an das Substrat 4 angegossenen Schiene 6 abgelöst werden. Clips 5, die den Fig. 1a und b verwendeten Grussformen 1 entsprechen, können formschlüssig, in variabler Anzahl und in variablem Abstand zueinander mit der Schiene 6 verbunden und von dieser auch wieder abgelöst werden.

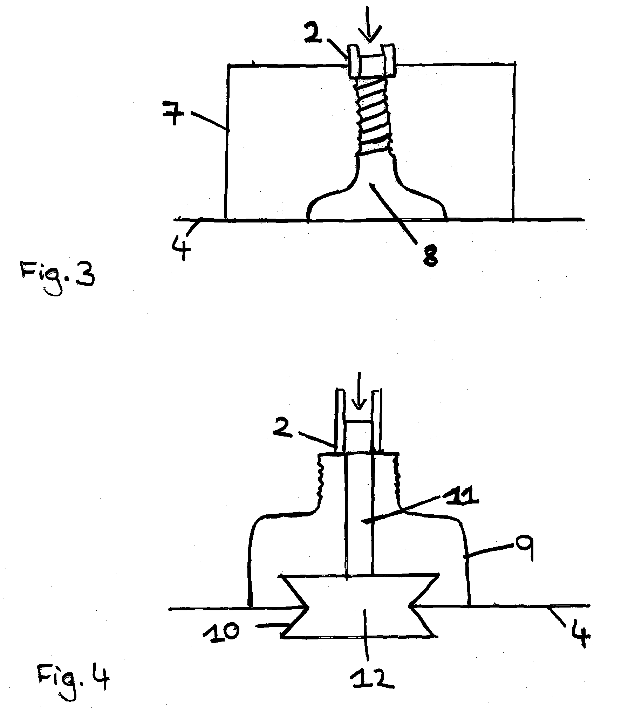

In Fig. 3 ist eine rotationssymmetrische oder rechteckige Gussform 7 im seitlichen Querschnitt abgebildet, die auf ein Substrat 4 gesetzt und durch eine Öffnung 2 mit flüssigem Klebstoff befüllt wird. Die Gussform ist derart mit Gewindenuten ausgestaltet, dass nach dem Aushärten des Klebstoffes und nach dem Entfernen der Gussformteile oder der Gussform in einem Stück beispielsweise ein Befestigungselement mit Aussengewinde 8 erhalten wird.
Fig. 4 zeigt eine rechteckige oder rotationssymmetrische Gussform 9 im seitlichen Querschnitt mit einer Öffnung 2, die so auf ein Substrat 4, welches eine Aussparung in Form eines halben Schwalbenschwanzes 10 aufweist, aufgesetzt wird, dass ein Hohlraum entsteht, der einen Schwalbenschwanz mit einem Stempel 11 ergibt, wobei sich eine Hälfte des Schwalbenschwanzes im Substrat, die andere Hälfte sich oberhalb des Substrats befindet. Die Gussform 9 wird durch die Öffnung 2 mit flüssigem Klebstoff befüllt. Nach Aushärten des Klebstoffes werden die Teile der Gussform 9 oder die Gussform in einem Stück so entfernt, dass ein Befestigungselement 12 auf dem Substrat zurückbleibt, welches im Substrat verankert ist und einen Stempel 11 aufweist.

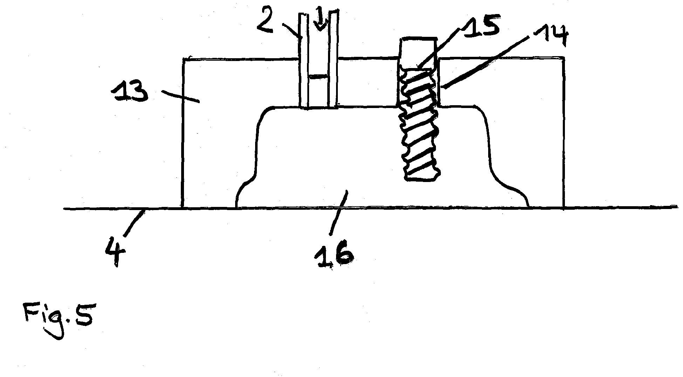

Fig. 5 stellt einen seitlichen Querschnitt einer mehrteiligen, beispielsweise rotationssymmetrischen oder rechteckigen, hier dreiteiligen Gussform 13 dar, welche auf ein Substrat 4 gesetzt wird und eine Öffnung 2 zum Einfüllen von flüssigem Klebstoff, sowie eine zweite Öffnung 14 umfasst. Durch die zweite Öffnung wird ein Formteil 15 in den Hohlraum eingebracht. Durch die Öffnung zum Einfüllen von flüssigem Klebstoff 2 wird die Gussform mit flüssigem Klebstoff befüllt. Nach Aushärten des Klebstoffes werden die drei Teile der Gussform gelöst und das Formteil 15 aus dem ausgehärteten Klebstoff entformt. Fig.5 zeigt eine Schraube als Formteil 15, so dass nach Entfernen der Gussform und Entformen des Formteils ein an das Substrat angegossenes Befestigungselement 16, welches ein Innengewinde besitzt, erhalten wird.

## Patentansprüche

1. Verfahren zur In-Situ-Herstellung eines lasttragenden Befestigungselements (5, 8, 12) umfassend
a) das Bereitstellen eines oder mehrerer Substrate (4),
b) Anordnen einer ein- oder mehrteiligen Gussform (1, 7, 9, 13) auf dem Substrat (4) oder den Substraten,
c) Befüllen der Gussform (1, 7, 9, 13) durch eine Öffnung (2) mit einem flüssigen Klebstoff, und
d) Aushärten des Klebstoffes auf dem oder den Substraten (4),
wobei in c) die Gussform (1, 7, 9, 13) mit einem schnell aushärtenden Zwei-Komponenten-Klebstoff auf Basis von Polyharnstoff, welcher zu einem Duromeren aushärtet, befüllt wird,
wobei der Zwei-Komponenten-Klebstoff eine isocyanathaltige Komponente A und eine aminhaltige Komponente B umfasst, wobei
- die Komponente A ein Isocyanat-terminiertes Präpolymer mit einer Isocyanat-Funktionalität von ≥ 1,7; und
- die Komponente B wenigstens ein Di- und/oder Polyamin enthält,
und wobei das stöchiometrische Verhältnis von Isocyanatgruppen in Komponente A zu Amingruppen in Komponente B 0,5 bis 1,2 beträgt.

2. Verfahren nach Anspruch 1, wobei die Substrate (4) eine Aussparung, insbesondere eine Vertiefung, in der Oberfläche aufweisen, in welche der Klebstoff eindringt.

3. Verfahren nach Anspruch 1 oder 2, wobei vor dem Befüllen der Gussform (1, 7, 9, 13) mit Klebstoff insbesondere durch eine weitere Öffnung (14) ein Formteil (15) in den Hohlraum der Gussform (1, 7, 9, 13) eingebracht wird.

4. Verfahren nach Anspruch 3, wobei das Formteil (15) nach dem Aushärten des Klebstoffes gelöst wird.

5. Verfahren nach einem der Ansprüche 3 oder 4, worin das Formteil (15) eine Schraube, ein Bolzen, ein Stempel, eine Niete oder ein Stift ist.

6. Verfahren nach einem der Ansprüche 1 bis 5, wobei in einem weiteren Verfahrensschritt e) die Gussform (1, 7, 9, 13) vom Befestigungselement (5, 8, 12) gelöst wird.

7. Verfahren nach einem der Ansprüche 1 bis 6, wobei das Befestigungselement (5, 8, 12) ein Clip, ein Bolzen, eine Hülse, ein Innengewinde, eine Schraube, ein Stift, eine Aussparung, ein Vorsprung, eine Schiene, ein Widerhaken, eine Niete, eine Lasche oder ein Winkel ist.

8. Verfahren nach einem der Ansprüche 1 bis 7, wobei in Verfahrensschritt a) die Substrate Oberflächen unterschiedlicher Rauheit und/oder ein Substrat (4) Bereiche unterschiedlicher Rauheit umfassen.

9. Verwendung eines flüssig zu applizierenden Klebstoffes zur In-Situ-Herstellung eines lasttragendes Befestigungselements (5, 8, 12) auf einem Substrat (4), wobei der Klebstoff ein schnell aushärtender Zwei-Komponenten-Klebstoff auf Basis von Polyharnstoff, welcher zu einem Duromeren aushärtet, ist,
wobei der Zwei-Komponenten-Klebstoff eine isocyanathaltige Komponente A und eine aminhaltige Komponente B umfasst, wobei
- die Komponente A ein Isocyanat-terminiertes Präpolymer mit einer Isocyanat-Funktionalität von ≥ 1,7; und
- die Komponente B wenigstens ein Di- und/oder Polyamin enthält,
und wobei das stöchiometrische Verhältnis von Isocyanatgruppen in Komponente A zu Amingruppen in Komponente B 0,5 bis 1,2 beträgt.

10. Verwendung nach Anspruch 9 wobei das Befestigungselement (5, 8, 12) ein Clip, ein Bolzen, eine Hülse, ein Innengewinde, eine Schraube, ein Stift, eine Aussparung, ein Vorsprung, eine Schiene, ein Widerhaken, eine Niete, eine Lasche oder ein Winkel ist.

11. Substrat (4) mit einem lasttragenden Befestigungselement (5, 8, 12), erhältlich durch das Verfahren gemäss den Ansprüchen 1 bis 6.

## Claims

1. Process for the in-situ production of a load-bearing fixing element (5, 8, 12) comprising
a) provision of one or more substrates (4),
b) arrangement of a single- or multipart casting mould (1, 7, 9, 13) on the substrate (4) or on the substrates,
c) charging of a liquid adhesive to the casting mould (1, 7, 9, 13) through an aperture (2), and
d) hardening of the adhesive on the substrate(s) (4),
where
in c), a quick-hardening two-component adhesive based on polyurea, which hardens to give a thermoset, is charged to the casting mould (1, 7, 9, 13)
where the two-component adhesive comprises an isocyanate-containing component A and an amine-containing component B, where
- component A comprises an isocyanate-terminated prepolymer with isocyanate functionality ≥ 1.7; and
- component B comprises at least one di- and/or polyamine,
and where the stoichiometric ratio of isocyanate groups in component A to amine groups in component B is 0.5 to 1.2.

2. Process according to Claim 1, where the substrates (4) have a cutout, in particular a depression, in the surface, into which the adhesive penetrates.

3. Process according to Claim 1 or 2, where, before adhesive is charged to the casting mould (1, 7, 9, 13), a shaped part (15) is introduced into the cavity of the casting mould (1, 7, 9, 13) in particular via a further aperture (14).

4. Process according to Claim 3, where the shaped part (15) is removed after hardening of the adhesive.

5. Process according to either of Claims 3 and 4, in which the shaped part (15) is a screw, a bolt, a post, a rivet or a peg.

6. Process according to any of Claims 1 to 5, where the casting mould (1, 7, 9, 13) is removed from the fixing element (5, 8, 12) in a further step e) .

7. Process according to any of Claims 1 to 6, where the fixing element (5, 8, 12) is a clip, a bolt, a socket, an internal screw thread, a screw, a peg, a cutout, a projection, a rail, a barbed hook, a rivet, a lug or an angle.

8. Process according to any of Claims 1 to 7, where, in step a), the substrates comprise surfaces of different roughness and/or a substrate (4) comprises regions of different roughness.

9. Use of an adhesive to be applied in liquid form for the in-situ production of a load-bearing fixing element (5, 8, 12) on a substrate (4), where the adhesive is a quick-hardening two-component adhesive based on polyurea, which hardens to give a thermoset, where the two-component adhesive comprises an isocyanate-containing component A and an amine-containing component B, where
- component A comprises an isocyanate-terminated prepolymer with isocyanate functionality ≥ 1.7; and
- component B comprises at least one di- and/or polyamine,
and where the stoichiometric ratio of isocyanate groups in component A to amine groups in component B is 0.5 to 1.2.

10. Use according to Claim 9, where the fixing element (5, 8, 12) is a clip, a bolt, a socket, an internal screw thread, a screw, a peg, a cutout, a projection, a rail, a barbed hook, a rivet, a lug or an angle.

11. Substrate (4) with a load-bearing fixing element (5, 8, 12), obtainable by the process according to Claims 1 to 6.

## Revendications

1. Procédé de fabrication in situ d'un élément de fixation porteur (5, 8, 12), comprenant :
a) la préparation d'un ou de plusieurs substrats (4),
b) l'agencement d'un moule de coulée à une ou plusieurs parties (1, 7, 9, 13) sur le substrat (4) ou les substrats,
c) le remplissage du moule de coulée (1, 7, 9, 13) par une ouverture (2) avec un adhésif liquide, et
d) le durcissement de l'adhésif sur le ou les substrats (4),
en c), le moule de coulée (1, 7, 9, 13) étant rempli avec un adhésif bicomposant à durcissement rapide à base de polyurée, qui durcit en un duromère,
l'adhésif bicomposant comprenant un composant contenant des isocyanates A et un composant contenant des amines B,
- le composant A contenant un prépolymère à terminaison isocyanate ayant une fonctionnalité isocyanate ≥ 1,7 ; et
- le composant B contenant au moins une di- et/ou polyamine,
et le rapport stœchiométrique entre les groupes isocyanate dans le composant A et les groupes amine dans le composant B étant de 0,5 à 1,2.

2. Procédé selon la revendication 1, dans lequel les substrats (4) comprennent un évidement, notamment un creux, dans la surface, dans lequel l'adhésif pénètre.

3. Procédé selon la revendication 1 ou 2, dans lequel, avant le remplissage du moule de coulée (1, 7, 9, 13) avec l'adhésif, une pièce de forme (15) est introduite dans la cavité du moule de coulée (1, 7, 9, 13), notamment par une ouverture supplémentaire (14).

4. Procédé selon la revendication 3, dans lequel la pièce de forme (15) est enlevée après le durcissement de l'adhésif.

5. Procédé selon l'une quelconque des revendications 3 ou 4, dans lequel la pièce de forme (15) est une vis, un boulon, un poinçon, un rivet ou une goupille.

6. Procédé selon l'une quelconque des revendications 1 à 5, dans lequel le moule de coulée (1, 7, 9, 13) est enlevé de l'élément de fixation (5, 8, 12) dans une étape de procédé supplémentaire e).

7. Procédé selon l'une quelconque des revendications 1 à 6, dans lequel l'élément de fixation (5, 8, 12) est un clip, un boulon, une douille, un filetage intérieur, une vis, une goupille, un évidement, une protubérance, une glissière, un barbillon, un rivet, un rabat ou un coin.

8. Procédé selon l'une quelconque des revendications 1 à 7, dans lequel, à l'étape de procédé a), les substrats comprennent des surfaces de rugosité différente et/ou un substrat (4) comprend des zones de rugosité différente.

9. Utilisation d'un adhésif à appliquer sous forme liquide pour la fabrication in situ d'un élément de fixation porteur (5, 8, 12) sur un substrat (4), l'adhésif étant un adhésif bicomposant à durcissement rapide à base de polyurée, qui durcit en un duromère,
l'adhésif bicomposant comprenant un composant contenant des isocyanates A et un composant contenant des amines B,
- le composant A contenant un prépolymère à terminaison isocyanate ayant une fonctionnalité isocyanate ≥ 1,7 ; et
- le composant B contenant au moins une di- et/ou polyamine,
et le rapport stœchiométrique entre les groupes isocyanate dans le composant A et les groupes amine dans le composant B étant de 0,5 à 1,2.

10. Utilisation selon la revendication 9, dans laquelle l'élément de fixation (5, 8, 12) est un clip, un boulon, une douille, un filetage intérieur, une vis, une goupille, un évidement, une protubérance, une glissière, un barbillon, un rivet, un rabat ou un coin.

11. Substrat (4) muni d'un élément de fixation porteur (5, 8, 12), pouvant être obtenu par le procédé selon les revendications 1 à 6.
